# EUROPEAN PATENT SPECIFICATION

(11) **EP 4 481 690 B1**
(45) Date of publication and mention of the grant of the patent: **07.10.2026**
(21) Application number: 24183476.1
(22) Date of filing: 20.06.2024
(51) Int. Cl.: G06T 19/00

(54) **SYSTEMS AND METHODS FOR GENERATING CUSTOMIZABLE THREE-DIMENSIONAL ACCESSORY MODELS FROM TWO-DIMENSIONAL IMAGES OF AN ACCESSORY DESIGN**
SYSTEME UND VERFAHREN ZUR ERZEUGUNG ANPASSBARER DREIDIMENSIONALER ZUBEHÖRMODELLE AUS ZWEIDIMENSIONALEN BILDERN EINES ZUBEHÖRDESIGNS
SYSTÈMES ET PROCÉDÉS DE GÉNÉRATION DE MODÈLES D'ACCESSOIRE TRIDIMENSIONNELS PERSONNALISABLES À PARTIR D'IMAGES BIDIMENSIONNELLES D'UNE CONCEPTION D'ACCESSOIRE

(30) Priority: 20.06.2023 US 202363509047 P; 11.06.2024 US 202418739791
(43) Date of publication of application: 25.12.2024
(73) Proprietor: Perfect Mobile Corp., 23141 New Taipei City (TW)
(72) Inventor: LIU, Yi-Hsin, 104077 Taipei City (TW); HUANG, Liang-Jung, 407051 Taichung City (TW)
(74) Representative: Zinkler, Franz

(56) References cited:
- US-B2- 10 712 811
- ANONYMOUS: "2d Image to 3d Printed Jewelry : 4 Steps - Instructables", 29 May 2023 (2023-05-29), XP093211770, Retrieved from the Internet <URL:https://web.archive.org/web/20230529133136/https://www.instructables.com/2d-Image-to-3d-Printed-Jewelry/>

## Description

### CROSS-REFERENCE TO RELATED APPLICATION

This application claims priority to, and the benefit of, U.S. Provisional Patent Application entitled, "System and Method for Generating Customizable Three-Dimensional Accessory Models from Two-Dimensional Images," having Serial No. 63,509,047, filed on June 20, 2023.

### TECHNICAL FIELD

The present disclosure generally relates to systems and methods for generating customizable three-dimensional accessory models from two-dimensional images of an accessory design.

US 10 712 811 B2 discloses an augmented reality presentation including a digital model of a product in connection with a camera stream. The publication by anonymous: "2D Images to 3D printed jewelry: 4 steps - instructables", 29 May 2023, XP093211770 discloses a method of making a 3D printed jewelry from a 2D image using free 3D CAD software.

### SUMMARY

It is an object of the present invention to provide an improved concept for virtual try-on. This object is achieved by a method of claim 1, a system of claim 5, or a non-transitory storage medium of claim 9.

In accordance with one embodiment, a computing device processes a two-dimensional (2D) image depicting an image of an accessory design and extracts target design features of the accessory design depicted in the 2D image. The computing device converts the target design features into a three-dimensional (3D) accessory model and generates a surface attributes map based on the accessory design depicted in the 2D image, wherein the surface attributes map comprises at least one of: an albedo map, metallic appearance attributes, a roughness map, and a normal map, wherein the surface attributes map is generated by an artificial intelligence (AI) model. The computing device generates a joint based on the target design features and the 3D accessory model. wherein generating the joint based on the target design features and the 3D accessory model comprises: identifying a cycle portion and a non-cycle portion based on connectivity of a skeletonization graph of the target design features; and identifying a 2D joint comprising a connection between the cycle portion and the non-cycle portion; and determining the joint in the 3D accessory model by mapping the 2D joint to 3D space. The computing device performs virtual application of the 3D accessory model with the surface attributes map and the joint on a user.

Another embodiment is a system that comprises a memory storing instructions and a processor coupled to the memory. The processor is configured to process a two-dimensional (2D) image depicting an image of an accessory design and extract target design features of the accessory design depicted in the 2D image, wherein the surface attributes map comprises at least one of: an albedo map, metallic appearance attributes, a roughness map, and a normal map, wherein the surface attributes map is generated by an artificial intelligence model. The processor is further configured to convert the target design features into a three-dimensional (3D) accessory model and generate a surface attributes map based on the accessory design depicted in the 2D image. The processor is further configured to generate a joint based on the target design features and the 3D accessory model, wherein the processor is configured to generate the joint based on the target design features and the 3D accessory model by: identifying a cycle portion and a non-cycle portion based on connectivity of a skeletonization graph of the target design features; and identifying a 2D joint comprising a connection between the cycle portion and the non-cycle portion; and determining the joint in the 3D accessory model by mapping the 2D joint to 3D space. The processor is further configured to perform virtual application of the 3D accessory model with the surface attributes map and the joint on a user.

Another embodiment is a non-transitory computer-readable storage medium storing instructions to be implemented by a computing device. The computing device comprises a processor, wherein the instructions, when executed by the processor, cause the computing device to process a two-dimensional (2D) image depicting an image of an accessory design and extract target design features of the accessory design depicted in the 2D image, wherein the surface attributes map comprises at least one of: an albedo map, metallic appearance attributes, a roughness map, and a normal map, wherein the surface attributes map is generated by an artificial intelligence model. The processor is further configured by the instructions to convert the target design features into a three-dimensional (3D) accessory model, wherein the processor is configured to generate the joint based on the target design features and the 3D accessory model by: identifying a cycle portion and a non-cycle portion based on connectivity of a skeletonization graph of the target design features; and identifying a 2D joint comprising a connection between the cycle portion and the non-cycle portion; and determining the joint in the 3D accessory model by mapping the 2D joint to 3D space, and generate a surface attributes map based on the accessory design depicted in the 2D image. The processor is further configured by the instructions to generate a joint based on the target design features and the 3D accessory model. The processor is further configured by the instructions to perform virtual application of the 3D accessory model with the surface attributes map and the joint on a user.

Other systems, methods, features, and advantages of the present disclosure will be apparent to one skilled in the art upon examining the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.

Various aspects of the disclosure are better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device configured to generate customizable 3D accessory models from 2D images according to various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for generating customizable 3D accessory models from 2D images according to various embodiments of the present disclosure.
FIG. 4 illustrates an example user interface provided on a display of the computing device of FIG. 1 whereby an image of an accessory design is captured and displayed to the user according to various embodiments of the present disclosure.
FIG. 5 illustrates the image processor analyzing a 2D image and generating a segmentation mask, an object contour of the accessory design, and a skeletonization graph of the 2D image according to various embodiments of the present disclosure.
FIG. 6 illustrates the 3D model geometry module processing the segmentation mask generated by the image processor and sampling the vertices distributed in the 2D plane along the x and y axes according to various embodiments of the present disclosure.
FIG. 7 illustrates the 3D model geometry module generating a 3D curved mesh according to various embodiments of the present disclosure.
FIG. 8 illustrates the 3D model geometry module duplicating the curved 3D mesh to generate a symmetrically duplicated 3D curved mesh according to various embodiments of the present disclosure.
FIG. 9 illustrates generation of joints in the 3D accessory model according to various embodiments of the present disclosure.
FIG. 10 illustrates use of a shift window for analyzing the accessory design for potential joints according to various embodiments of the present disclosure.
FIG. 11 illustrates the joint configurator constructing a graph of potential joints from the surface attributes map generated earlier according to various embodiments of the present disclosure.
FIG. 12 illustrates the gem object integration module performing patch detection using a sliding window approach for identifying candidate locations for gem objects in the accessory design according to various embodiments of the present disclosure.
FIG. 13 illustrates the use of template matching of different gem objects based on attributes of the 3D accessory model and the candidate locations to identify the specific gem objects in the accessory design according to various embodiments of the present disclosure.
FIG. 14 illustrates the gem object integration module estimating the appropriate gem setting in the 3D accessory model by matching the contours between the 2D accessory design and the 3D accessory model according to various embodiments of the present disclosure.
FIG. 15 another example user interface on a display of the computing device in FIG. 1, whereby the final 3D accessory model is displayed according to various embodiments of the present disclosure.

### DETAILED DESCRIPTION

The subject disclosure is now described with reference to the drawings, where like reference numerals are used to refer to like elements throughout the following description. Other aspects, advantages, and novel features of the disclosed subject matter will become apparent from the following detailed description and corresponding drawings.

The jewelry industry has seen significant advancements in recent years with the incorporation of such technology as computer-aided design (CAD) and three-dimensional (3D) printing to streamline the design and manufacturing processes. Despite these advancements, however, creating intricate and customizable jewelry designs for accessories remains a complex and time-consuming task. The conversion of two-dimensional (2D) images into 3D accessory models, as well as the incorporation of j oints, dangling elements, and gem objects, has traditionally required specialized skills and extensive manual labor.

To address these challenges, embodiments are disclosed for generating customizable 3D virtual accessory models from 2D images of accessories with integrated joint and gem object customization. Embodiments for generating customizable 3D accessory models allow users to streamline the accessory design process and enable rapid prototyping for jewelers, designers, manufacturers, and so on. Efficient and customizable techniques for performing the accessory design process are disclosed for creating intricate and dynamic accessory designs. The generated 3D accessory models can be further processed, rendered, or manufactured, thereby reducing the time and resources required for designing and producing accessories.

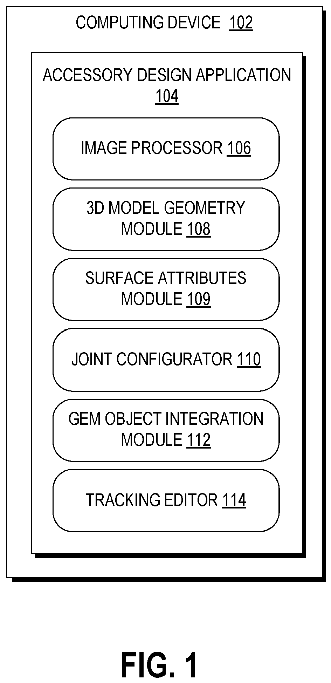

A description of a system for generating customizable 3D accessory models from 2D images is described followed by a discussion of the operation of the components within the system. FIG. 1 is a block diagram of a computing device 102 in which the embodiments disclosed herein may be implemented. The computing device 102 may comprise one or more processors that execute machine executable instructions to perform the features described herein. For example, the computing device 102 may be embodied as a computing device such as, but not limited to, a smartphone, a tablet-computing device, a laptop, and so on.

An accessory design application 104 executes on a processor of the computing device 102 and includes an image processor 106, a 3D model geometry module 108, a surface attributes module 109, a joint configurator 110, a gem object integration module 112, and a tracking editor 114. The image processor 106 is configured to obtain digital images of a 2D accessory design using, for example, a camera of the computing device 102. The computing device 102 may also be equipped with the capability to connect to the Internet, and the image processor 106 may be configured to obtain an image or video of an accessory design from another device or server.

The images obtained by the image processor 106 may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. The video may be encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), 360 degree video, 3D scan model, or any number of other digital formats.

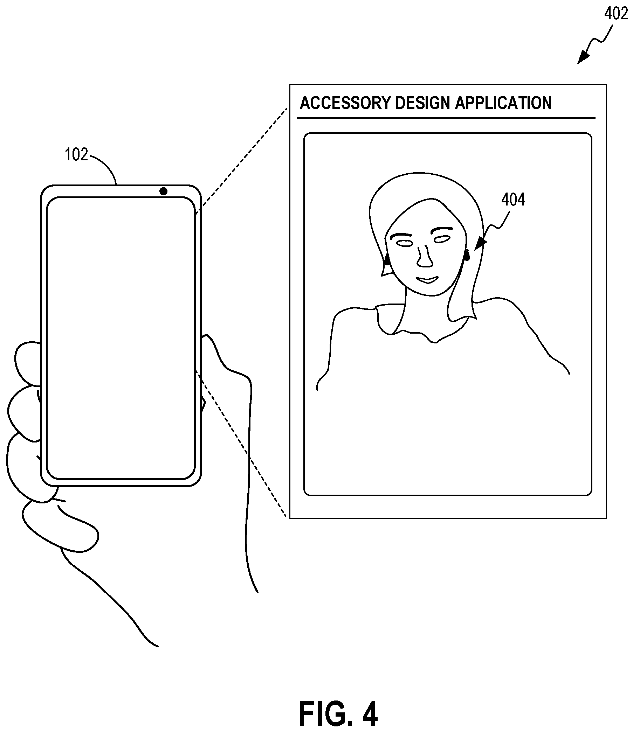

FIG. 4 illustrates an example user interface 402 provided on a display of the computing device 102 whereby an image of a 2D accessory design 404 is captured and displayed to the user. The accessory design 404 may comprise, for example, an earring, a necklace, a bracelet, a wristband, and so on. For some implementations, the image processor 106 (FIG. 1) executing in the computing device 102 may be configured to cause a camera of the computing device 102 to capture an image or a video of an accessory design of interest for purposes of generating a customizable 3D virtual accessory model. The computing device 102 may also be equipped with the capability to connect to the Internet, and the image processor 106 may be configured to obtain an image or video of the user from another device or server.

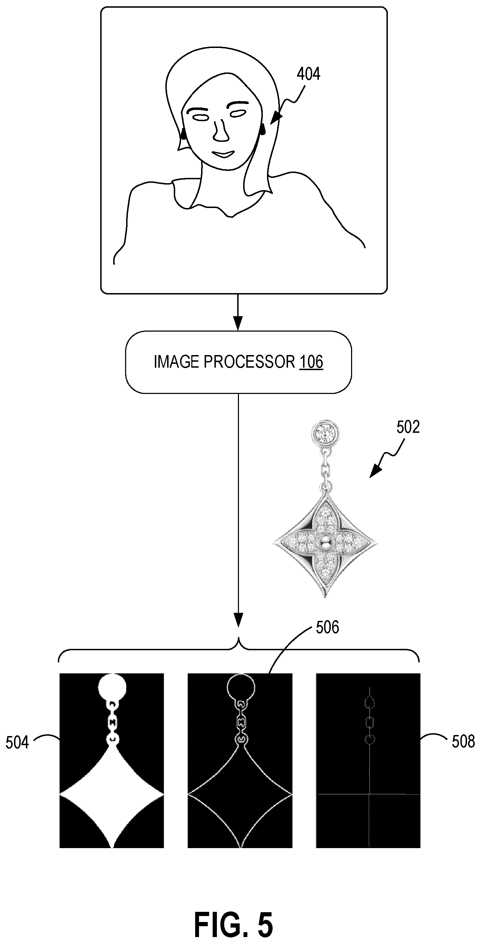

The image processor 106 is further configured to process the 2D image depicting the image of the accessory design by extracting target design features of the accessory design depicted in the 2D image. For some embodiments, the target design features comprise a segmentation mask of the accessory design depicted in the 2D image, an object contour of the accessory design depicted in the 2D image, and a skeletonization graph of the accessory design depicted in the 2D image. To illustrate, reference is made to FIG. 5, which shows the image processor 106 analyzing a 2D image 502 and generating a segmentation mask 504, an object contour 506 of the accessory design, and a skeletonization map 508 of the 2D image 502 for purposes of generating a 3D model of the accessory design.

Referring back to the system block diagram in FIG. 1, the 3D model geometry module 108 is executed by the processor of the computing device 102 to convert the target design features into a 3D accessory model. For some embodiments, the 3D model geometry module 108 is configured to convert the target design features into a 3D accessory model by generating a 3D flat mesh in an x-y plane based on one of the target design features and adjusting a depth of each vertex in the 3D flat mesh along a z-axis to generate a 3D curve mesh. The 3D model geometry module 108 adjusts the depth of each vertex by adjusting the depth of each vertex along the z-axis based on a threshold and a distance in the x-y plane between the vertex in the 3D flat mesh and the object contour of target design features. The 3D model geometry module 108 generates a mirrored duplicate of the 3D curve mesh along the z-axis and merges the 3D curve mesh with the mirrored duplicate of the 3D curve mesh to generate the 3D accessory model.

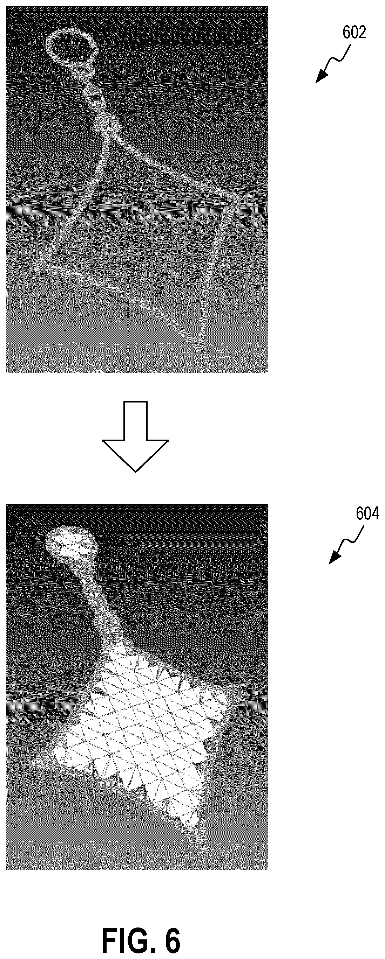

Referring to FIG. 6, the 3D model geometry module 108 is configured to receive the target design features (e.g., segmentation mask) generated by the image processor 106 and sample the vertices 602 distributed in the 2D plane along the x and y axes to generate a triangular mesh accessory model. The 3D model geometry module 108 then constructs a 2D mesh 604 with the sampled vertices 602.

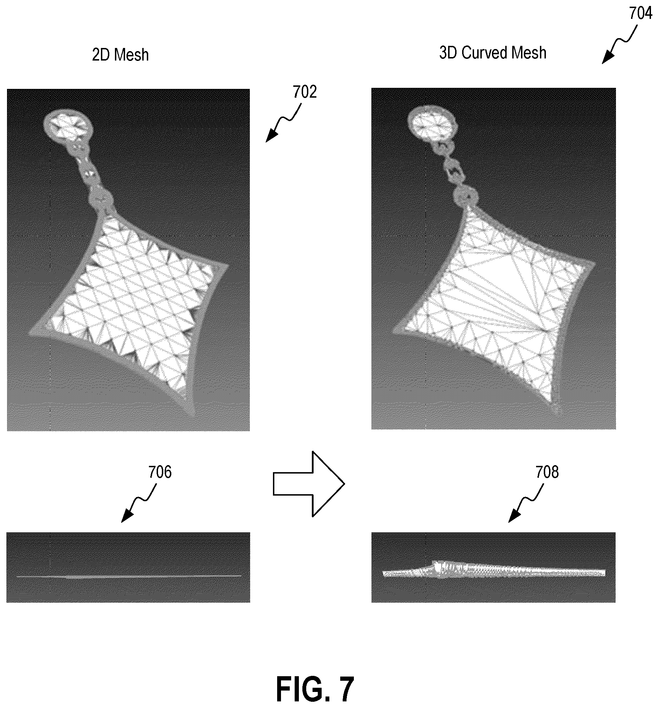

Referring now to FIG. 7, the 3D model geometry module 108 warps the 2D mesh 702 by adjusting the depth of the edge vertices along the z-axis to generate a 3D curved mesh 704. For some embodiments, the camera coordinate system is used as the 3D coordinate system where the z-axis is perpendicular to the image. The 2D mesh 702 will then be transformed into the x-y plane of the 3D coordinates as the new 3D mesh where each vertex (a, b) of the 2D mesh is mapped to a corresponding vertex (a, b, 0) in the 3D coordinate system. The 3D model geometry module 108 utilizes a threshold to determine which vertices should be adjusted. For each vertex, the 3D model geometry module 108 determines whether the distance between the current vertex and the edge is less than the threshold. If the distance is less than the threshold, the value along the z-axis of this vertex is adjusted based on the distance to the edge. The smaller the distance, the more the value in z-axis is adjusted.

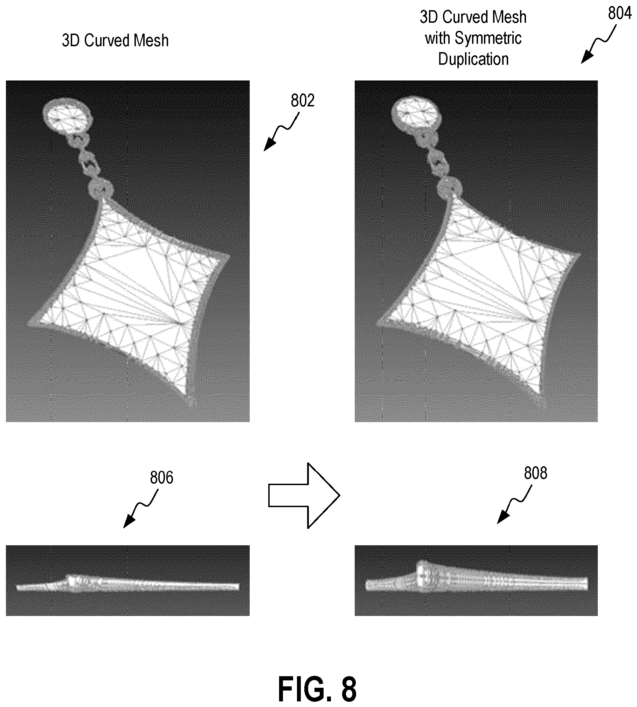

The adjusted vertices will appear as a curve from the side such that the adjusted mesh comprises a curved 3D mesh. A side view 706 of the 2D mesh 702 prior to warping, and a side view 708 of the 3D curved mesh 704 are shown. Proceeding now to FIG. 8, the 3D model geometry module 108 duplicates the curved 3D mesh 802 to generate a symmetrically duplicated 3D curved mesh 804. A side view 806 of the curved 3D mesh 802 prior to symmetric duplication, and a side view 708 of the symmetrically duplicated 3D curved mesh 804 are shown.

Referring back to the system block diagram in FIG. 1, the surface attributes module 109 is configured to generate a surface attributes map of the 3D accessory model based on the accessory design depicted in the 2D image. The surface attributes map may comprise, for example, an albedo map, a diffuse map, metallic appearance attributes, environmental lighting attributes, and so on. For some embodiments, the surface attributes module 109 applies a deep learning model to analyze materials of the accessory design to generate the surface attributes map to provide a more realistic appearance of the 3D accessory model.

The joint configurator 110 is executed by the processor of the computing device 102 to generate joints in the 3D accessory model to provide a more realistic depiction of links on the accessory design. According to the invention, the joint configurator 110 is configured to generate the joint based on the target design features and the 3D accessory model. The joint configurator 110 identifies a cycle portion and a non-cycle portion based on connectivity of the skeletonization map of the target design features. The joint configurator 110 is further configured to identify a 2D joint comprising a connection between the cycle portion and the non-cycle portion. The joint configurator 110 filters thin portions identified in the accessory design based on corresponding connectivity within the skeleton representation. The joint configurator 110 then determines the joint in the 3D accessory model by mapping the 2D joint to 3D space.

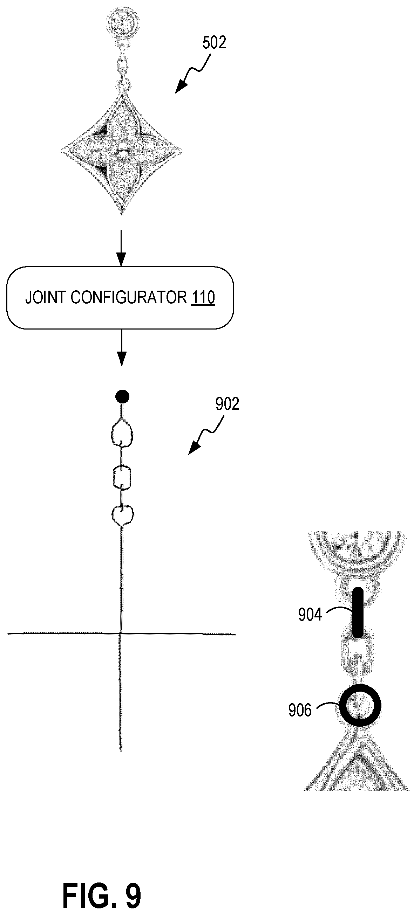

To illustrate, reference is made to FIG. 9, where the joint configurator 110 generates joints in the 3D accessory model by identifying possible attachment points 902 in the 3D accessory model for depicting joints based on the overall symmetry of the 3D accessory model and/or locations of vertices in the 3D accessory model. Such attributes may include, for example, the overall balance of the 2D accessory design, structural integrity of the 2D accessory design, and the overall aesthetics of the 2D accessory design. The structural integrity refers to the skeletonization map 508 of the 2D accessory design, as shown, for example, in FIG. 5. Derivation of the skeleton map is described in more detail below. Note that in the example accessory design shown in FIG. 9, the joints of the accessory design include both the thin regions 904 as well as the rings 906 of the accessory design.

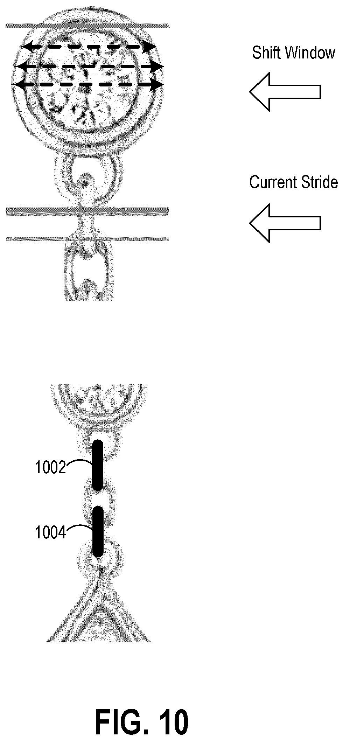

Proceeding to FIG. 10, a shift window is defined for analyzing the accessory design to identify potential joints. Based on the average width of the shift window, a width threshold is defined. If the average width in the current stride is thinner than the width threshold, the joint configurator 110 identifies the center of the current stride as a joint candidate. This process is performed from the top to the bottom of the accessory design. In the example shown in FIG. 10, two loops 1002, 1004 are identified using the shift window technique described above.

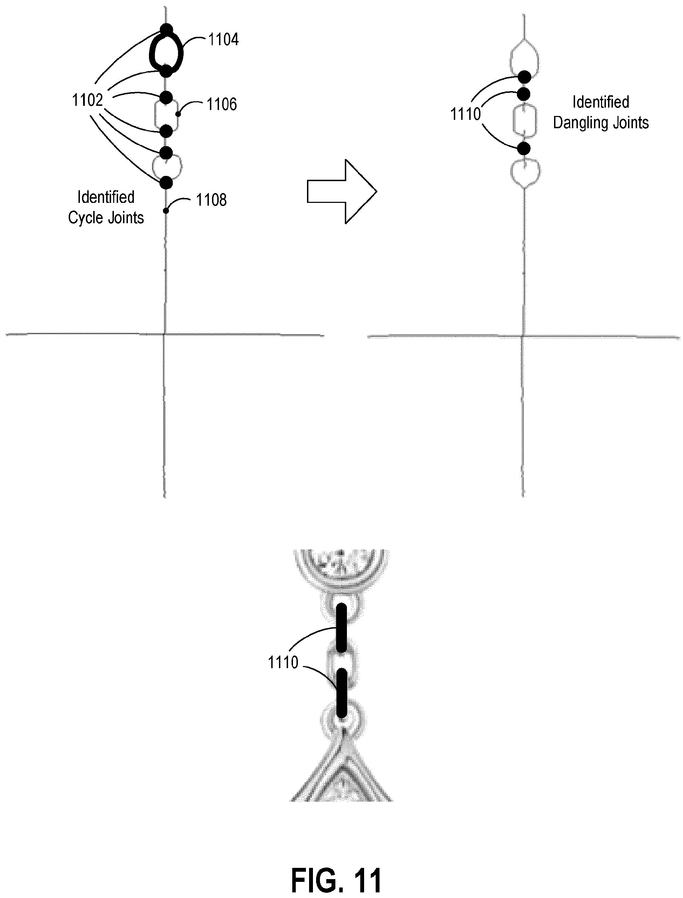

Referring now to FIG. 11, the joint configurator 110 constructs a graph of potential joints from the target design features generated earlier. Specifically, the joint configurator 110 constructs a graph of potential joints based on the skeletonization map of the 2D accessory design found in the surface attributes map generated earlier. Cycles and cycle joints within the accessory design are identified, where cycle joints refer to points connected to non-cycle points. A cycle refers to the minimum closed cycle path in the skeletonization map. For example, in the skeletonization map depicted in FIG. 11, there are three cycles 1104 in the map. Cycle points 1106 refer to the points in the skeleton map that are part of the cycle 1104, while non-cycle points 1108 refer to those that are not. A cycle joint 1102 denotes a cycle point connected to other non-cycle points 1108. Dangling joints within the thin regions 1110 are then identified.

Referring back to the system block diagram in FIG. 1, the gem object integration module 112 is executed to generate gem objects onto the 3D accessory model. In particular, the gem object integration module 112 identifies candidate locations for placement of the gem objects in the 3D accessory model by performing patch detection utilizing a sliding window algorithm. For some embodiments, the gem object integration module 112 performs object detection derived from a deep learning model to identify candidate locations for gem objects. The gem object integration module 112 then performs template matching of different gem objects based on attributes of the 3D accessory model and the candidate locations. This is performed in order to determine the type of gem depicted in the accessory design. The gem object integration module 112 also determines a pose of a matching template based on contour matching between the 2D image and the 3D accessory model in order to determine the appropriate gem setting in the 3D accessory model.

In accordance with some embodiments, the template matching process first comprises template preparation performed by the gem object integration module 112 where templates of the objects of interest are created. The templates typically comprise contour representations of the objects of interest (e.g., gem). For some embodiments, these templates are generated based on a set of training images depicting variations of the objects (e.g., various gems) where contour information is extracted from the training images depicting the objects. The gem object integration module 112 processes the image by performing such operations as resizing, denoising, grayscale conversion, and so on to generate a pre-processed image. The gem object integration module 112 then executes an edge detection algorithm such as Canny edge detection to identify the edges of the object depicted in the pre-processed image.

To perform contour matching, the gem object integration module 112 processes each contour in the pre-processed image and calculates a descriptor such as a corresponding Hu moment or other suitable descriptor. The descriptors of all the contours of the pre-processed image are then compared to the descriptors of all the contours in each template using a matching algorithm. The gem object integration module 112 determines that a match occurs if a similarity score corresponding to the descriptors in the pre-processed image and the descriptors in a particular template meets or exceeds a threshold. For some embodiments, the gem object integration module 112 validates that a match has occurred by checking for overlapping bounding boxes or by applying geometric constraints between the pre-processed image and the candidate matching template. Once a matching template is identified, the gem object integration module 112 performs object location of the object in the image by defining a bounding box of the contour or by applying other techniques such as generation of convex hull of the object. The gem object integration module 112 then generates the gem objects on the 3D accessory model based on the matching template and the determined pose.

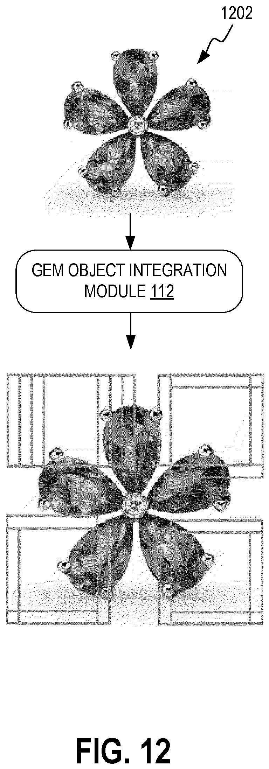

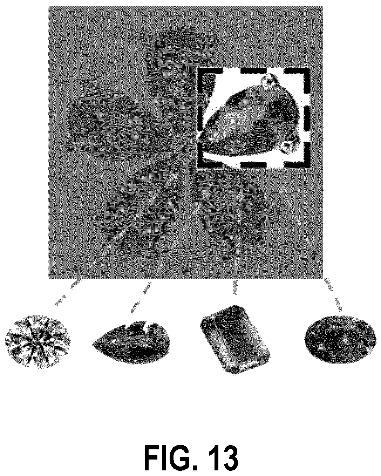

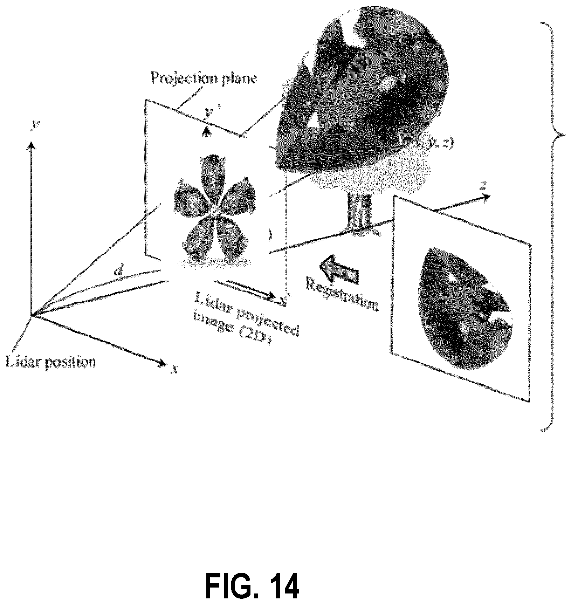

To further illustrate, reference is made to FIG. 12, which illustrates the gem object integration module 112 performing patch detection using a sliding window approach for identifying candidate locations for gem objects in the accessory design 1202. FIG. 13 illustrates the use of template matching of different gem objects based on attributes of the 3D accessory model and the candidate locations to identify the specific gem objects in the accessory design. Proceeding to FIG. 14, the gem object integration module 112 estimates the appropriate gem setting in the 3D accessory model by matching the contours between the 2D accessory design and the 3D accessory model.

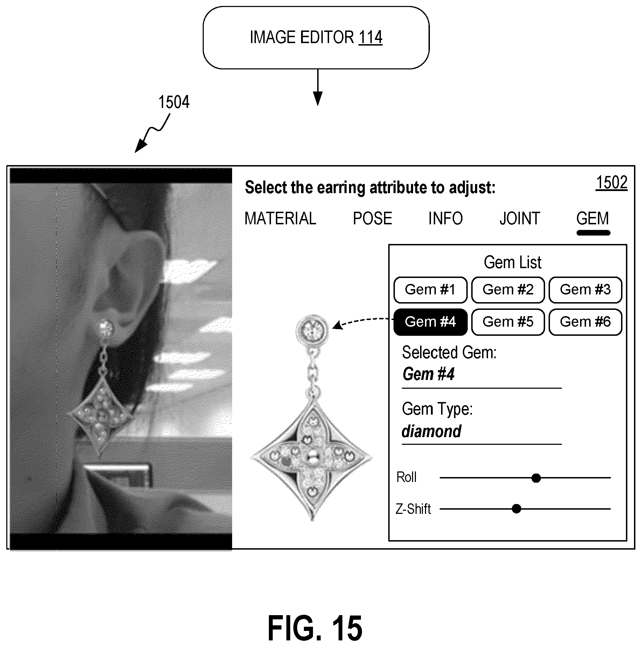

FIG. 15 illustrates another example user interface 1502 on a display of the computing device 102 (FIG. 1), where the final 3D accessory model 1504 is worn by the user, thereby providing the user with real-time visualization of the 3D accessory model 1504. The tracking editor 114 tracks movement of the user and performs virtual application of the 3D accessory model 1504 as the user moves. Real-time visualization of the 3D accessory model 1504 may be utilized, for example, for further prototyping, manufacturing, and so on. For some embodiments, the user interface 1502 allows the user to further customize the 3D accessory model 1504 by specifying a desired gem type, specifying a pose of the gem object, and so on.

In the example shown in FIG. 15, the user selects "Gem #4" to be inserted into the 3D accessory model, where the user may select a desired gem for each gem location shown. The user interface 1502 may also allow the user to adjust other accessory attributes such as the material of the 3D accessory model, the pose of each gem in the 3D accessory model, the type of joints in the 3D accessory model, and so on.

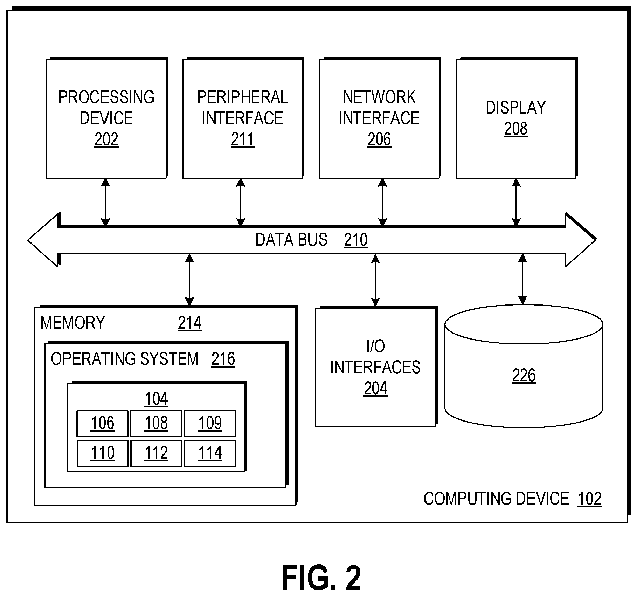

FIG. 2 illustrates a schematic block diagram of the computing device 102 in FIG. 1. The computing device 102 may be embodied as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include a custom made processor, a central processing unit (CPU), or an auxiliary processor among several processors associated with the computing device 102, a semiconductor based microprocessor (in the form of a microchip), a macroprocessor, one or more application specific integrated circuits (ASICs), a plurality of suitably configured digital logic gates, and so forth.

The memory 214 may include one or a combination of volatile memory elements (e.g., random-access memory (RAM) such as DRAM and SRAM) and nonvolatile memory elements (e.g., ROM, hard drive, tape, CDROM). The memory 214 typically comprises a native operating system 216, one or more native applications, emulation systems, or emulated applications for any of a variety of operating systems and/or emulated hardware platforms, emulated operating systems, *etc.* For example, the applications may include application specific software that may comprise some or all the components of the computing device 102 displayed in FIG. 1.

In accordance with such embodiments, the components are stored in memory 214 and executed by the processing device 202, thereby causing the processing device 202 to perform the operations/functions disclosed herein. For some embodiments, the components in the computing device 102 may be implemented by hardware and/or software.

Input/output interfaces 204 provide interfaces for the input and output of data. For example, where the computing device 102 comprises a personal computer, these components may interface with one or more input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

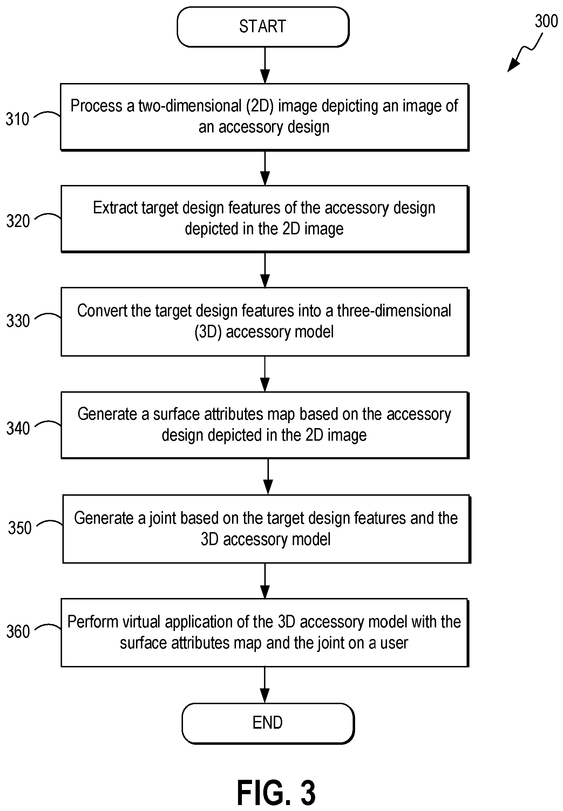

Reference is made to FIG. 3, which is a flowchart 300 in accordance with various embodiments for generating customizable 3D accessory models from 2D images, where the operations are performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is displayed. For example, the order of execution of two or more blocks may be scrambled relative to the order shown. In addition, two or more blocks shown in succession in FIG. 3 may be executed concurrently or with partial concurrence. It is understood that all such variations are within the scope of the present disclosure.

At block 310, the computing device 102 processes a 2D image depicting an image of an accessory design. The accessory design may comprise an earring, necklace, a bracelet, a wristband, and so on.

At block 320, the computing device 102 extracts target design features of the accessory design depicted in the 2D image. For some embodiments, the target design features include a segmentation mask of the accessory design depicted in the 2D image, an object contour of the accessory design depicted in the 2D image, and a skeletonization map of the accessory design depicted in the 2D image.

At block 330, the computing device 102 converts the target design features into a 3D accessory model. For some embodiments, the computing device 102 converts the target design features into the 3D accessory model by generating a 3D flat mesh in an x-y plane based on one of the target design features and adjusting a depth of each vertex in the 3D flat mesh along a z-axis to generate a 3D curve mesh. The computing device 102 adjusts the depth of each vertex by adjusting the depth of each vertex along the z-axis based on a threshold and a distance in the x-y plane between the vertex in the 3D flat mesh and the object contour of target design features. The computing device 102 generates a mirrored duplicate of the 3D curve mesh along the z-axis and merges the 3D curve mesh with the mirrored duplicate of the 3D curve mesh to generate the 3D accessory model.

At block 340, the computing device 102 generates a surface attributes map based on the accessory design depicted in the 2D image. According to the invention, the surface attributes map is generated by an artificial intelligence (AI) model and comprises an albedo map, metallic appearance attributes, a roughness map, and/or a normal map.

At block 350, the computing device 102 generates a joint based on the target design features and the 3D accessory model. According to the invention, the computing device 102 generates the joint based on the target design features and the 3D accessory model by identifying a cycle portion and a non-cycle portion based on connectivity of a skeletonization map of the target design features, identifying a 2D joint comprising a connection between the cycle portion and the non-cycle portion, and determining the joint in the 3D accessory model by mapping the 2D joint to 3D space.

At block 360, the computing device 102 performs virtual application of the 3D accessory model with the surface attributes map and the joint on a user. Thereafter, the process in FIG. 3 ends.

It should be emphasized that the above-described embodiments of the present disclosure are merely possible examples of implementations set forth for a clear understanding of the principles of the disclosure. Many variations and modifications may be made to the above-described embodiment(s) without departing from the scope of the following claims.

## Claims

1. A method for virtual try-on, comprising:
processing a two-dimensional (2D) image depicting an image of an accessory design;
extracting target design features of the accessory design depicted in the 2D image;
converting the target design features into a three-dimensional (3D) accessory model;
generating a surface attributes map based on the accessory design depicted in the 2D image, wherein the surface attributes map comprises at least one of: an albedo map, metallic appearance attributes, a roughness map, and a normal map, wherein the surface attributes map is generated by an artificial intelligence (AI) model;
generating a joint based on the target design features and the 3D accessory model, wherein generating the joint based on the target design features and the 3D accessory model comprises:
identifying a cycle portion and a non-cycle portion based on connectivity of a skeletonization graph of the target design features; and
identifying a 2D joint comprising a connection between the cycle portion and the non-cycle portion; and
determining the joint in the 3D accessory model by mapping the 2D joint to 3D space; and
performing virtual application of the 3D accessory model with the surface attributes map and the joint on a user.

2. The method of claim 1, wherein the accessory design comprises at least one of: an earring, a necklace, a bracelet or a wristband, or wherein the method is implemented in a computing device (102).

3. The method of claim 1 or 2, wherein the target design features comprise: a segmentation mask of the accessory design depicted in the 2D image, an object contour of the accessory design depicted in the 2D image, and a skeletonization graph of the accessory design depicted in the 2D image.

4. The method of any one of claims 1 to 3, wherein converting the target design features into the 3D accessory model comprises:
generating a 3D flat mesh in an x-y plane based on one of the target design features;
adjusting a depth of each vertex in the 3D flat mesh along a z-axis to generate a 3D curve mesh, wherein adjusting the depth of each vertex comprises adjusting the depth of each vertex along the z-axis based on a threshold and a distance in the x-y plane between the vertex in the 3D flat mesh and an object contour of target design features;
generating a mirrored duplicate of the 3D curve mesh along the z-axis; and
merging the 3D curve mesh with the mirrored duplicate of the 3D curve mesh to generate the 3D accessory model.

5. A system, comprising:
a memory (214) storing instructions;
a processor (202) coupled to the memory (214) and configured by the instructions to at least:
process a two-dimensional (2D) image depicting an image of an accessory design;
extract target design features of the accessory design depicted in the 2D image;
convert the target design features into a three-dimensional (3D) accessory model;
generate a surface attributes map based on the accessory design depicted in the 2D image, wherein the surface attributes map comprises at least one of: an albedo map, metallic appearance attributes, a roughness map, and a normal map, wherein the surface attributes map is generated by an artificial intelligence (AI) model;
generate a joint based on the target design features and the 3D accessory model, wherein the processor (202) is configured to generate the joint based on the target design features and the 3D accessory model by:
identifying a cycle portion and a non-cycle portion based on connectivity of a skeletonization graph of the target design features; and
identifying a 2D joint comprising a connection between the cycle portion and the non-cycle portion; and
determining the joint in the 3D accessory model by mapping the 2D joint to 3D space; and
perform virtual application of the 3D accessory model with the surface attributes map and the joint on a user.

6. The system of claim 5, wherein the accessory design comprises at least one of: an earring, a necklace, a bracelet or a wristband.

7. The system of claim 5 or 6, wherein the target design features comprise: a segmentation mask of the accessory design depicted in the 2D image, an object contour of the accessory design depicted in the 2D image, and a skeletonization graph of the accessory design depicted in the 2D image.

8. The system of any one of claims 5 to 7, wherein the processor (202) is configured to convert the target design features into the 3D accessory model by:
generating a 3D flat mesh in an x-y plane based on one of the target design features;
adjusting a depth of each vertex in the 3D flat mesh along a z-axis to generate a 3D curve mesh, wherein adjusting the depth of each vertex comprises adjusting the depth of each vertex along the z-axis based on a threshold and a distance in the x-y plane between the vertex in the 3D flat mesh and an object contour of target design features;
generating a mirrored duplicate of the 3D curve mesh along the z-axis; and
merging the 3D curve mesh with the mirrored duplicate of the 3D curve mesh to generate the 3D accessory model.

9. A non-transitory computer-readable storage medium storing instructions to be implemented by a computing device (102) having a processor (202), wherein the instructions, when executed by the processor (202), cause the computing device (102) to perform a method for virtual try-on in accordance with any one of claims 1 to 4.

## Patentansprüche

1. Verfahren zur virtuellen Anprobe, das folgende Merkmale aufweist:
Verarbeiten eines zweidimensionalen (2D) Bildes, das ein Bild eines Zubehörentwurfs darstellt;
Extrahieren von Zielentwurfsmerkmalen des in dem 2D-Bild dargestellten Zubehörentwurfs;
Umwandeln der Zielentwurfsmerkmale in ein dreidimensionales (3D) Zubehörmodell;
Erzeugen einer Oberflächenattributkarte basierend auf dem in dem 2D-Bild dargestellten Zubehörentwurf, wobei die Oberflächenattributkarte zumindest eines der folgenden Merkmale aufweist: eine Albedo-Karte, Attribute eines metallischen Erscheinungsbilds, eine Rauheitskarte und eine Normalkarte, wobei die Oberflächenattributkarte durch ein Modell künstlicher Intelligenz (AI) erzeugt wird;
Erzeugen eines Verbindungsglieds basierend auf den Zielentwurfsmerkmalen und dem 3D-Zubehörmodell, wobei das Erzeugen des Verbindungsglieds basierend auf den Zielentwurfsmerkmalen und dem 3D-Zubehörmodell folgende Schritte aufweist:
Identifizieren eines Zyklusabschnitts und eines Nicht-Zyklusabschnitts basierend auf einer Konnektivität eines Skelettierungsgraphen der Zielentwurfsmerkmale; und
Identifizieren eines 2D-Verbindungsglieds, das eine Verbindung zwischen dem Zyklusabschnitt und dem Nicht-Zyklusabschnitt aufweist; und
Bestimmen des Verbindungsglieds in dem 3D-Zubehörmodell durch Abbilden des 2D-Verbindungsglieds auf einen 3D-Raum; und
Durchführen einer virtuellen Anwendung des 3D-Zubehörmodells mit der Oberflächenattributkarte und des Verbindungsglieds an einem Benutzer.

2. Verfahren gemäß Anspruch 1, wobei der Zubehörentwurf zumindest eines der folgenden Merkmale aufweist: einen Ohrring, eine Halskette, einen Armreif oder ein Armband, oder wobei das Verfahren in einer Rechenvorrichtung (102) implementiert ist.

3. Verfahren gemäß Anspruch 1 oder 2, wobei die Zielentwurfsmerkmale folgende Merkmale aufweisen: eine Segmentierungsmaske des in dem 2D-Bild dargestellten Zubehörentwurfs, eine Objektkontur des in dem 2D-Bild dargestellten Zubehörentwurfs und einen Skelettierungsgraphen des in dem 2D-Bild dargestellten Zubehörentwurfs.

4. Verfahren gemäß einem der Ansprüche 1 bis 3, wobei das Umwandeln der Zielentwurfsmerkmale in das 3D-Zubehörmodell folgende Schritte aufweist:
Erzeugen eines flachen 3D-Netzes in einer x-y-Ebene basierend auf einem der Zielentwurfsmerkmale;
Anpassen einer Tiefe jedes Scheitels in dem flachen 3D-Netz entlang einer z-Achse, um ein 3D-Kurvennetz zu erzeugen, wobei das Anpassen der Tiefe jedes Scheitels ein Anpassen der Tiefe jedes Scheitels entlang der z-Achse basierend auf einem Schwellenwert und einem Abstand in der x-y-Ebene zwischen dem Scheitel in dem flachen 3D-Netz und einer Objektkontur von Zielentwurfsmerkmalen aufweist;
Erzeugen eines gespiegelten Duplikats des 3D-Kurvennetzes entlang der z-Achse; und
Zusammenführen des 3D-Kurvennetzes mit dem gespiegelten Duplikat des 3D-Kurvennetzes, um das 3D-Zubehörmodell zu erzeugen.

5. System, das folgende Merkmale aufweist:
einen Speicher (214), der Anweisungen speichert;
einen Prozessor (202), der mit dem Speicher (214) gekoppelt ist und durch die Anweisungen zumindest zu Folgendem konfiguriert ist:
Verarbeiten eines zweidimensionalen (2D) Bildes, das ein Bild eines Zubehörentwurfs darstellt;
Extrahieren von Zielentwurfsmerkmalen des in dem 2D-Bild dargestellten Zubehörentwurfs;
Umwandeln der Zielentwurfsmerkmale in ein dreidimensionales (3D) Zubehörmodell;
Erzeugen einer Oberflächenattributkarte basierend auf dem in dem 2D-Bild dargestellten Zubehörentwurf, wobei die Oberflächenattributkarte zumindest eines der folgenden Merkmale aufweist: eine Albedo-Karte, Attribute eines metallischen Erscheinungsbilds, eine Rauheitskarte und eine Normalkarte, wobei die Oberflächenattributkarte durch ein Modell künstlicher Intelligenz (AI) erzeugt wird;
Erzeugen eines Verbindungsstücks basierend auf den Zielentwurfsmerkmalen und dem 3D-Zubehörmodell, wobei der Prozessor (202) dazu konfiguriert ist, das Verbindungsstück basierend auf den Zielentwurfsmerkmalen und dem 3D-Zubehörmodell zu erzeugen durch:
Identifizieren eines Zyklusabschnitts und eines Nicht-Zyklusabschnitts basierend auf einer Konnektivität eines Skelettierungsgraphen der Zielentwurfsmerkmale; und
Identifizieren eines 2D-Verbindungsstücks, das eine Verbindung zwischen dem Zyklusabschnitt und dem Nicht-Zyklusabschnitt aufweist; und
Bestimmen des Verbindungsstücks in dem 3D-Zubehörmodell durch Abbilden des 2D-Verbindungsstücks auf einen 3D-Raum; und
Durchführen einer virtuellen Anwendung des 3D-Zubehörmodells mit der Oberflächenattributkarte und dem Verbindungsstück an einem Benutzer.

6. System gemäß Anspruch 5, wobei der Zubehörentwurf zumindest eines der folgenden Merkmale aufweist: einen Ohrring, eine Halskette, einen Armreif oder ein Armband.

7. System gemäß Anspruch 5 oder 6, wobei die Zielentwurfsmerkmale folgende Merkmale aufweisen: eine Segmentierungsmaske des in dem 2D-Bild dargestellten Zubehörentwurfs, eine Objektkontur des in dem 2D-Bild dargestellten Zubehörentwurfs und einen Skelettierungsgraphen des in dem 2D-Bild dargestellten Zubehörentwurfs.

8. System gemäß einem der Ansprüche 5 bis 7, wobei der Prozessor (202) dazu konfiguriert ist, die Zielentwurfsmerkmale in das 3D-Zubehörmodell umzuwandeln durch:
Erzeugen eines flachen 3D-Netzes in einer x-y-Ebene basierend auf einem der Zielentwurfsmerkmale;
Anpassen einer Tiefe jedes Scheitels in dem flachen 3D-Netz entlang einer z-Achse, um ein 3D-Kurvennetz zu erzeugen, wobei das Anpassen der Tiefe jedes Scheitels ein Anpassen der Tiefe jedes Scheitels entlang der z-Achse basierend auf einem Schwellenwert und einem Abstand in der x-y-Ebene zwischen dem Scheitel in dem flachen 3D-Netz und einer Objektkontur von Zielentwurfsmerkmalen aufweist;
Erzeugen eines gespiegelten Duplikats des 3D-Kurvennetzes entlang der z-Achse; und
Zusammenführen des 3D-Kurvennetzes mit dem gespiegelten Duplikat des 3D-Kurvennetzes, um das 3D-Zubehörmodell zu erzeugen.

9. Nichtflüchtiges computerlesbares Speichermedium, das Anweisungen speichert, die durch eine Rechenvorrichtung (102) mit einem Prozessor (202) zu implementieren sind, wobei die Anweisungen bei Ausführung durch den Prozessor (202) bewirken, dass die Rechenvorrichtung (102) ein Verfahren zur virtuellen Anprobe gemäß einem der Ansprüche 1 bis 4 durchführt.

## Revendications

1. Procédé d'essayage virtuel, comprenant :
le traitement d'une image bidimensionnelle (2D) représentant une image d'une conception d'accessoire ;
l'extraction des caractéristiques de conception cibles de la conception d'accessoire représentée dans l'image 2D ;
la conversion des caractéristiques de conception cibles en un modèle d'accessoire tridimensionnel (3D) ;
la génération d'une carte des attributs de surface sur la base de la conception d'accessoire représentée dans l'image 2D, dans lequel la carte des attributs de surface comprend au moins l'un d'une carte d'albédo, des attributs d'aspect métallique, d'une carte de rugosité et d'une carte normale, dans lequel la carte des attributs de surface est générée par un modèle d'intelligence artificielle (IA) ;
la génération d'un raccord sur la base des caractéristiques de conception cibles et du modèle d'accessoire en 3D, dans lequel la génération du raccord sur la base des caractéristiques de conception cibles et du modèle d'accessoire en 3D comprend :
l'identification d'une partie cyclique et d'une partie non cyclique sur la base de la connectivité d'un graphique de squelettisation des caractéristiques de conception cibles ; et
l'identification d'un raccord en 2D comprenant une connexion entre la partie cyclique et la partie non cyclique ; et
la détermination du raccord dans le modèle d'accessoire en 3D en transposant le raccord en 2D dans l'espace 3D ; et
la réalisation d'une application virtuelle du modèle d'accessoire en 3D, avec la carte des attributs de surface et du raccord, sur un utilisateur.

2. Procédé selon la revendication 1, dans lequel la conception d'accessoire comprend au moins l'un d'une boucle d'oreille, d'un collier, d'un bracelet ou d'un bracelet de poignet, ou dans lequel le procédé est mis en œuvre dans un dispositif informatique (102).

3. Procédé selon la revendication 1 ou 2, dans lequel les caractéristiques de conception cibles comprennent : un masque de segmentation de la conception d'accessoire représentée dans l'image 2D, un contour de l'objet de la conception d'accessoire représentée dans l'image 2D, et un graphique de squelettisation de la conception d'accessoire représentée dans l'image 2D.

4. Procédé selon l'une quelconque des revendications 1 à 3, dans lequel la conversion des caractéristiques de conception cibles en le modèle d'accessoire en 3D comprend :
la génération d'un maillage plat en 3D dans un plan x-y sur la base de l'une des caractéristiques de conception cibles ;
l'ajustement d'une profondeur de chaque sommet du maillage plat en 3D le long de l'axe z afin de générer un maillage courbe en 3D, dans lequel l'ajustement de la profondeur de chaque sommet comprend l'ajustement de la profondeur de chaque sommet le long de l'axe z sur la base d'un seuil et d'une distance, dans le plan x-y, entre le sommet du maillage plat en 3D et le contour d'un objet des caractéristiques de conception cibles ;
la génération d'une copie en miroir du maillage de la courbe en 3D le long de l'axe ; et
la fusion du maillage de la courbe en 3D avec sa copie en miroir afin de générer le modèle d'accessoire en 3D.

5. Système, comprenant :
une mémoire (214) stockant des instructions ;
un processeur (202) couplé à la mémoire (214) et configuré par les instructions pour au moins :
traiter une image bidimensionnelle (2D) représentant l'image d'une conception d'accessoire ;
extraire les caractéristiques de conception cibles de la conception d'accessoire représentée dans l'image 2D ;
convertir les caractéristiques de conception cibles en une conception d'accessoire tridimensionnel (3D) ;
générer une carte des attributs de surface sur la base de la conception d'accessoire représentée dans l'image 2D, dans lequel la carte des attributs de surface comprend au moins l'un d'une carte d'albédo, des attributs d'aspect métallique, d'une carte de rugosité et d'une carte normale, dans lequel la carte des attributs de surface est générée par un modèle d'intelligence artificielle (IA) ;
générer un raccord sur la base des caractéristiques de conception cibles et du modèle d'accessoire en 3D, dans lequel le processeur (202) est configuré pour générer le raccord sur la base des caractéristiques de conception cibles et du modèle d'accessoire en 3D en :
identifiant une partie cyclique et une partie non cyclique sur la base de la connectivité d'un graphique de squelettisation des caractéristiques de conception cibles ; et en
identifiant un raccord en 2D comprenant une connexion entre la partie cyclique et la partie non cyclique ; et en
déterminant le raccord dans le modèle d'accessoire en 3D en transposant le raccord en 2D dans l'espace 3D ; et en
réalisant une application virtuelle du modèle d'accessoire en 3D, avec la carte des attributs de surface et du raccord, sur un utilisateur.

6. Système selon la revendication 5, dans lequel le modèle d'accessoire comprend au moins l'un d'une boucle d'oreille, d'un collier, d'un bracelet ou d'un bracelet de poignet.

7. Système selon la revendication 5 ou 6, dans lequel les caractéristiques de conception cibles comprennent : un masque de segmentation de la conception d'accessoire représentée dans l'image 2D, un contour de l'objet de la conception d'accessoire représentée dans l'image 2D, et un graphique de squelettisation de la conception d'accessoire représentée dans l'image 2D.

8. Système selon l'une quelconque des revendications 5 à 7, dans lequel le processeur (202) est configuré pour convertir les caractéristiques de conception cibles en le modèle d'accessoire en 3D en :
générant un maillage plat en 3D dans un plan x-y sur la base de l'une des caractéristiques de conception cibles ;
ajustant la profondeur de chaque sommet du maillage plat en 3D le long de l'axe z afin de générer un maillage courbe en 3D, dans lequel l'ajustement de la profondeur de chaque sommet comprend l'ajustement de la profondeur de chaque sommet le long de l'axe z sur la base d'un seuil et d'une distance, dans le plan x-y, entre le sommet du maillage plat en 3D et le contour d'un objet des caractéristiques de conception cibles ;
générant une copie en miroir du maillage de la courbe en 3D le long de l'axe ; et en
fusionnant le maillage de la courbe en 3D avec sa copie en miroir afin de générer le modèle d'accessoire en 3D.

9. Support de stockage non volatile lisible par ordinateur, stockant des instructions destinées à être mises en œuvre par un dispositif informatique (102) présentant un processeur (202), dans lequel les instructions, lorsqu'elles sont exécutées par le processeur (202), amènent le dispositif informatique (102) à exécuter un procédé d'essayage virtuel selon l'une quelconque des revendications 1 à 4.
